# EUROPEAN PATENT APPLICATION

(11) **EP 1 571 596 A2**
(43) Date of publication of application: **07.09.2005**
(21) Application number: 05251069.0
(22) Date of filing: 23.02.2005
(51) Int. Cl.: G06T 15/40

(54) **A method and apparatus for object based occlusion culling**

(30) Priority: 02.03.2004 US 790904
(71) Applicant: ATI Technologies Inc., Ontario L3T 7X6 (CA)
(72) Inventor: Mitchell, Jason L., Seattle, Washington 98112 (US); Morein, Stephen L., Cambridge, Massachusetts 02139 (US); Taylor, Ralph Clay, Deland, Florida 32724 (US); Carey, John, Winter Springs, Florida 32708 (US)
(74) Representative: Howe, Steven

(57) **Abstract**

A method and apparatus for object-based visibility culling includes receiving a plurality of draw packets, such as pixels or vertices. The method and apparatus further includes comparing each of the plurality of draw packets to a bounding volume object, wherein the bounding volume object may be a low resolution geometric representation of a specific object. Whereupon, for each of the plurality of draw packets, if the draw packet is deemed potentially visible, setting a visibility query identifier and rendering the draw packets having the set visibility query identifier.

## Description

### FIELD OF THE INVENTION

The present invention relates to graphics processing and more specifically to the removal of non-visible render objects prior to rendering.

### BACKGROUND OF THE INVENTION

In a typical graphics processing system, inefficiencies arise based on the rendering of graphic elements, such as pixels, which are not visible to an end user. As the resolution of a graphical display increases, the amount of specific graphics rendering also thereby increases. Therefore, to reduce the amount of processing overhead there exist techniques for eliminating rendering elements prior to being processed by a graphics processing pipeline.

For example, one technique is the operation of a hierarchical Z buffering technique whereupon a rendering element is compared in a depth test relative to other rendering elements within a display screen. Another operating technique is the determination if a rendering element falls within a view frustum such that it would be visible within the boundaries of the graphical output.

A typical graphics processing system would provide for culling decisions to be made based on graphical hardware and a central processing unit (CPU). Prior art systems utilized a CPU-based bounding system which defines areas such as the view frustum in the CPU. Then these systems perform a test to determine if a draw packet, such as a plurality of pixels, is rendered as a function of a depth test or other visibility determination. Although, prior solutions require the rasterization of pixels to determine a Z occlusion of pixels for the depth determination. For example, a wall having a visible characteristic on it which may be visible through a doorway in a graphic output, prior technique systems require portals to determine the visibility in the other room. Typically, the CPU is unable to detect a divider with an object behind it relative to the defined viewing portals.

Therefore, in prior graphics rendering systems, culling decisions are difficult to make based on a required synchronization between the central processing unit and the associated hardware to determine free computed factors for making further visibility determinations. For example, the central processing unit would require a feedback from the hardware with regards to defined parameters for a viewing portal to determine whether drawing packets having a depth beyond the portal are visible and worth rendering or should be culled from the rendering pipeline.

Therefore, there exists a need for a graphics processing system which allows for object-based visibility culling.

### SUMMARY OF THE INVENTION

According to a first aspect of the present invention, a method for object based visibility culling comprises
receiving a plurality of draw packets;
comparing each of the plurality of draw packets to a bounding volume object;
for each of the plurality of draw packets, if the draw packet is deemed potentially visible, setting a visibility query identifier; and
rendering the draw packets having the set visibility query identifier.

According to a second aspect of the present invention, an apparatus for object based visibility culling, the apparatus comprising:
a general processing unit; and
a memory device storing executable instructions such that the general processing unit, in response to the executable instructions:
receives a plurality of draw packets;
compares each of the plurality of draw packets to a bounding volume object;
for each of the plurality of draw packets, if the draw packet is deemed potentially visible, sets a visibility query identifier; and
renders the draw packets having the set visibility query identifier.

### BRIEF DESCRIPTION OF THE DRAWINGS

FIG. 1 illustrates a schematic block diagram of an apparatus for object-based visibility culling in accordance with one embodiment of the present invention;
FIG. 2 illustrates a flow chart of a method for object-based visibility culling in accordance with one embodiment of the present invention;
FIG. 3 illustrates another embodiment of a method for object-based visibility culling; and
FIG. 4 illustrates a flow chart of one embodiment of an implementation of a method for object-based visibility culling.

### DETAILED DESCRIPTION OF A PREFERRED EMBODIMENT

Generally, the present invention includes the method and apparatus for object-based visibility culling, including the steps of receiving a plurality of draw packets. As discussed above, a draw packet may be a plurality of rendering elements, such as pixels, vertices, or any other suitable rendering element as recognized by one having ordinary skill in the art. The method and apparatus further includes comparing each of the plurality of draw packets to a bounding volume object, wherein the bounding volume object may be a low resolution geometric representation of a specific object, such as a window, doorway, or any other suitable portal through which viewing definitions may be defined. Whereupon, for each of the plurality of draw packets, if the draw packet is deemed potentially visible, setting a visibility query identifier and rendering the draw packets having the set visibility query identifier. In one embodiment, the visibility query identifier may be a single or multi bit indicator which indicates that the draw packet has been deemed potentially visible and therefore, warranting further rendering within a processing pipeline.

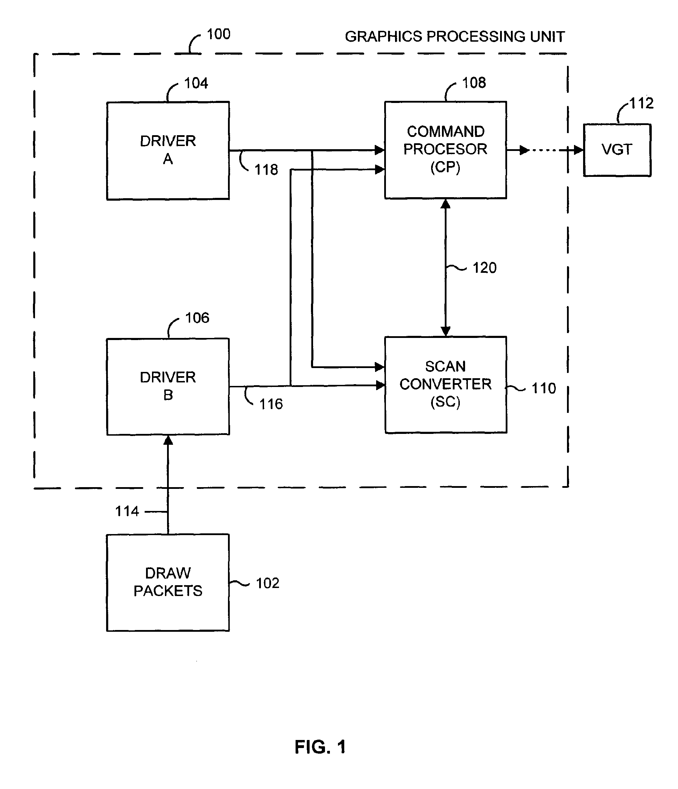

More specifically, FIG. 1 illustrates a graphics processing unit 100 operably coupled to receive a plurality of draw packets 102. The draw packets 102 are represented in a block format, which may be representative of a memory storage device, although, the draw packets may be provided from a previous position within the graphics rendering pipeline as recognized by one having ordinary skill in the art. The graphics processing unit includes driver A 104 and driver B 106, wherein driver A 104 and driver B 106 may be a specific implemented hardware, a software implementation running on a processor, or any other suitable combination of hardware and/or software as recognized by one having ordinary skill in the art. The graphics processing unit 100 further includes a command processor (CP) 108 and a scan converter (SC) 110.

In the embodiment of FIG. 1, the CP 108 is further couple to a vertex group tesselator (VGT) 112. As recognized by one having ordinary skill in the art, further graphical processing elements may be disposed between the GPU 100 and the VGT 112, wherein the VGT 112 thereupon provides for the further rendering of the draw packets, which are deemed potentially visible to provide a visible output. In the embodiment of FIG. 1, the draw packets 102 are received via connection 114 to driver B 106. Driver B 106 is further coupled to the scan converter 110 and the command processor 108 via connection 116. Driver A 104 is coupled to the CP 108 and SC 110 via connection 118. Moreover, the CP 108 is coupled to the SC 110 via connection 120. As recognized by one of ordinary skill in the art, connections 114, 116, 118, and 120 may be any suitable type of connection, such as a bus for providing data communication and data transmission thereacross.

It is also noted, FIG. 1 illustrates a hardware implementation of software implemented elements for performing the above-noted method and that the associated diagram provides a physical representation of software implemented techniques. Whereas, it is recognized that the present invention may be further implemented within hardware operating specific commands to perform the method, as discussed below. As such, the operation of FIG. 1 will be discussed further with respect to the steps of the below-described methods of the present invention.

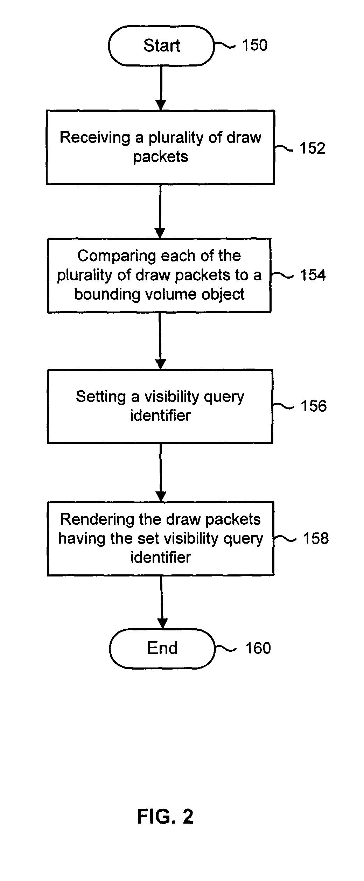

FIG. 2 illustrates one embodiment of a method for object-based visibility culling, the method begins step 150, by receiving a plurality of draw packets, step 152. As illustrated in FIG. 1, the draw packets 102, in one embodiment, are provided to driver B 106 within the GPU 100. The next step, step 154, is comparing each of the plurality draw packets to a bounding volume object. In one embodiment, the graphics processing unit 100, more specifically the command processor 108, generates a bounding volume object, such as a low resolution model as simple as a rectangular box, which is rendered prior to the detailed model and flanked with a begin/end aperture mechanism to identify it as a set of geometrics who visibility status is desired. One embodiment, included within the identification is a VIZ_QUERY_ID, which defines which one of a set of outstanding visibility queries this object should update.

In one embodiment, the graphics processing unit 100 determines, based on the results of, among other things, back-face culling, view frustum determination, and user-clip plane discard and hierarchical Z discard, if any pixels are potentially modified by the geometry between the begin/end of the visibility query. The determination resulting from step 154 is a not-visible/potentially visible determination and step 154 does not provide a succinct indication of whether a draw packet will in fact be rendered visible, but only rather a determination if any draw packet is specifically not visible due to some occlusion.

Therefore, the next step, step 156, of the method is for each of the plurality draw packets, if the draw packet is deemed potentially visible, setting a visibility query identifier. The next step, step 158, is then rendering the draw packet having the set visibility query identifier. As discussed with regards to FIG. 1, once the command processor 108, through a determination in conjunction with the scan converter 110, as discussed in further detail below, determines that the draw packets are potentially visible, the draw packets may be provided to the CP 108 for rendering based on a check of the visible query identifier and provided to the VGT 112 for subsequent potential display on an output device. Thereupon, the method is complete, step 160.

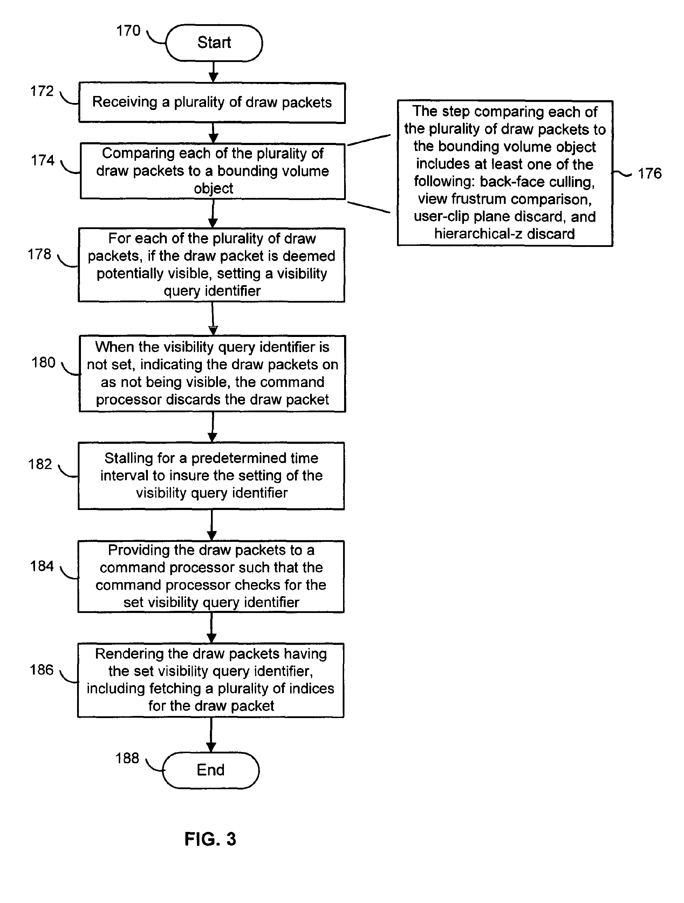

FIG. 3 illustrates another embodiment of a method for object-based visibility culling, in one embodiment utilizing the apparatus in FIG. 1. The method begins, 170, by receiving a plurality of draw packets, step 172, similar to step 152 of FIG. 2. The next step, step 174, is comparing each of the plurality draw packets to a bounding volume object similar to step 154 in FIG. 2. Although, step 174 may further include step 176 wherein comparing each of the plurality of draw packets to the bounding volume object includes back-face culling, view frustum comparison, user-clip plane discard, hierarchical Z discard, and any other suitable comparison techniques as recognized by one having ordinary skill in the art.

Whereupon, for each of the plurality of draw packets, if the draw packet is deemed potentially visible, the method includes setting a visibility query identifier, step 178, similar to step 156 of FIG. 2. Thereupon, if the visibility query identifier is not set, the method includes indicating the draw packet as not being visible such that the command processor discards the draw packet, step 180. Although, the next step, step 182, is stalling for a pre-determined time interval to insure the setting of the visibility query identifier. Thereupon, the next step is providing the draw packets to the command processor such that the command processor checks for the set visibility query identifier, step 184. If the visibility query identifier is set, the method includes rendering the draw packets having the set visibility query identifier, including fetching a plurality of indices for a draw packet, step 186. As such, the method is complete, step 188.

In one embodiment, there may be up to 64 independent visible query status values to allow multiple visible query geometries to be drawn. The noted 64 independent visible query status values are for exemplary purposes only and that any suitable number of independent visible queric may be utilized. In the present invention, there exists a potential internal latency of a pre-determined number of core clock cycles, to allow the visibility query geometry to finish past the hierarchical Z discard before the not-visible status can be determined. Therefore, if a conditional rendering packet, such as a draw packet is received before the corresponding visible query geometry, the CP will wait until the visibility query results have been returned to continue processing. Therefore, by providing for a multiple number of independent visible query status values, this may seek to hide the internal latency. In one embodiment, the graphics processing unit 100 of FIG. 1 manages additional hardware state values. In one embodiment, a single bit VIZ_QUERY_ENABLE bit may be used to represent whenever visibility testing is being performed. When this bit is set, hardware will be evaluating the processed geometry and updating an associated VIZ_QUERY_ID. The VIZ_QUERY_ID may be a six-bit field used when the VIZ_QUERY_ENABLE is active. In one embodiment, this field is used to define which of the 64 hardware queries is to be updated, in the implementation utilizing 64 different dependent visible query status values.

In one embodiment, a driver, which may be implemented in software operating on a processor, hardware, or any combination thereof, sets the VIZ_QUERY_ENABLE bit and the VIZ_QUERY_ID field using a set underscore state and/or incremental updates to these states. The driver may send a VIZ_QUERY_BEGIN_PKT which contains the VIZ_QUERY_ID upon processing a begin visibility query. Moreover, the driver may send a VIZ_QUERY_END_PKT which contains the VIZ_QUERY_ID upon processing the end visibility query. Furthermore, the driver may set up a modified DRAW_INDX packet, which will include a USER_QUERY_RESULT with the VIZ_QUERY_ID.

As there are multiple query results and the query results may span multiple draw commands, the driver manages the VIZ_QUERY_IDs across multiple driver contexts. Whereupon, in one embodiment is provided shared resources which can be called by the individual driver context to allocate and de-allocate from a common pool of QUERY_IDs. If the pool is empty, then a null QUERY_ID will be returned indicating that the VIZ_QUERY is not currently available. Furthermore, as the VIZ_QUERY begin/end may span multiple draw packets, it may further span driver context switches. Therefore, the driver includes the VIZ_QUERY_ENABLE in a command preamble. If the VIZ_QUERY_ENABLE is set, then the VIZ_QUERY_ID must also be included in the preamble.

Referring back to the CP 108 of FIG. 1, in one embodiment, the CP 108 maintains status values for all active visibility queries. One exemplary bit is a DISCARD bit, which provides a default to a zero value upon reset. Another status bit is an END_RCVD bit, which is also defaulted to a zero value on being reset. If the CP 108 begins the determination for a draw packet, a VIZQ_END status bit is set to a zero value. Furthermore, in one embodiment, an END_RCVD bit is defaulted to zero upon reset. Thereupon, if the END_RCVD bit is already set for a particular identifier, the CP 108 waits. Otherwise, the DISCARD bit is cleared, assuming a KEEP status, and the CP 108 issues a visible query begin event, wherein the visible query begin event is a write to a VGT_EVENT_INITIATOR with the corresponding identifier to a processor, such as the VGT 112.

In one embodiment, when the VIZQ_END flag is set, the CP 108 sets the corresponding END_RCVD bit, which will stall the next visibility query begin command until the status of the current visibility query command is received from the SC 110. Furthermore, the CP 108 created a visibility query end event, including writing the VGT_EVENT_INITIATOR with the corresponding identifier to a processor, such as the VGT 112. Thereupon, the visibility results are sent back to the CP 108 through the dedicated interface 120 from the SC 110 such that the CP 108 clears the corresponding END_RCVD bit for the visibility query and sets the DISCARD bit to the value provided by the SC 110.

In the event the draw packet is determined to be potentially visible, the DISCARD BIT is cleared and the CP 108 issues a visible query begin event, in one embodiment, writing a VGT_EVENT_INITIATOR register with an EVENT_ID. Furthermore, the SC 110 resets its visibility results for the associated visible query draw packet. For a VIZ_QUERY_END packet, the CP 108, in one embodiment, sets a corresponding END_RCVD bit for that ID. Thereupon, this stalls the next visible query begin packet until the visibility status is returned from the SC 110. The visibility results are sent back to the CP 108 from the SC 110 via, in one embodiment, a dedicated interface, such as connection 120 of FIG. 1. When the CP 108 receives a transfer from the SC 110, the CP 108 may clear the corresponding END_RCVD bits for VIZ_QUERY and set the discard bit to the value provided by the SC 110.

Furthermore, in one embodiment, the SC 110 uses the VIZ_QUERY_ENABLE and VIZ_QUERY_ID that are within a state sub-block. The SC 110 maintains an internal set of visible bits, one bit for each of the 64 VIZ_QUERIES in this embodiment. Moreover, the visible bits may be read/write accessible via a memory map register, not illustrated in FIG. 1. Although, as recognized by one of ordinary skill in the art, the visible bit may be disposed in any other suitable memory location. When the VIZ_QUERY_ENABLE bit is set and the SC 110 is processing the draw packets, any draw packets that survive the test, such as described in step 176 of FIG. 3, will have a current visible bit set to one. Thereupon, the SC 110 may provide, upon receiving a visibility query end command, a query result to the CP 108 across the dedicated bus 120.

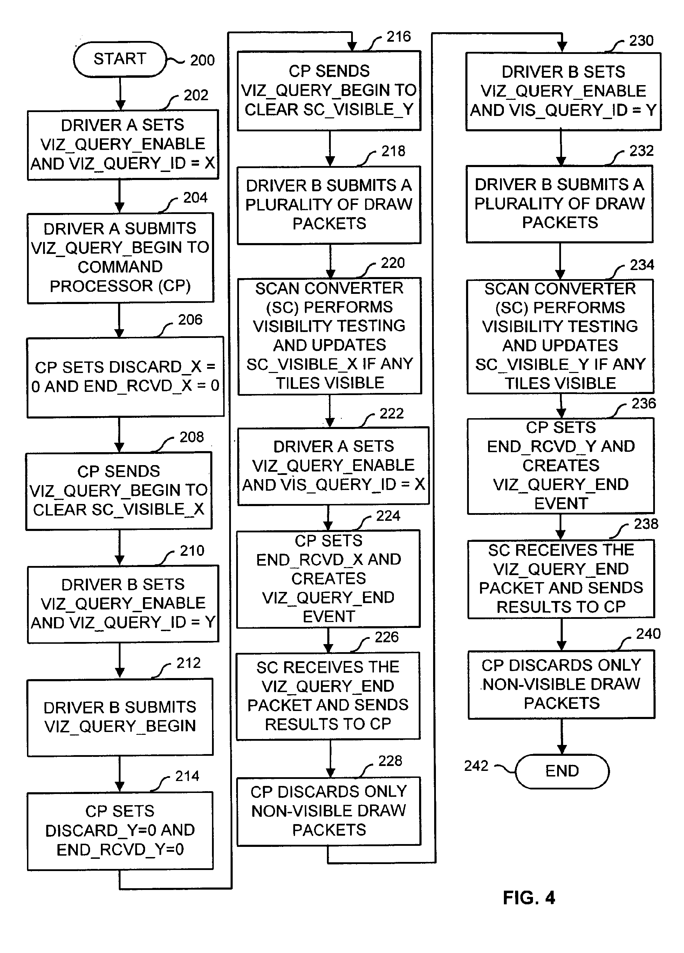

FIG. 4 illustrates one exemplary embodiment of data flow within a context which using the scan converter 110, the command processor 108, the drivers 104 and 106 of FIG. 1. The method begins, step 200, where driver A 104 sets a VIZ_QUERY_ENABLE and a VIZ_QUERY_ID equal to a value X, step 202. The next step, step 204, driver A submits a VIZ_QUERY_BEGIN to the command processor 108. Thereupon, step 206, the CP sets a DISCARD_X bit to zero value and an END_RCVD_X bit to zero.

Step 208, the CP 108 sends a VIZ_QUERY_BEGIN command to clear the SC_VISIBLE_X bit. Driver B 106 sets a VIZ_QUERY_ENABLE and VIZ_QUERY_ID bit equal to a value Y, step 210. Step 212, driver B 106 submits a VIZ_QUERY_BEGIN to the command processor 108. Thereupon, step 214, the command processor sets DISCARD_Y bit to a zero value and END_RCVD_Y bit value to a zero.

The command processor 108 sends the VIZ_QUERY_BEGIN command to clear the SC_VISIBLE_Y bit within the scan converter 110, step 216. At that point, step 218, driver B 106 submits a plurality of draw packets 102. Step 220, the scan converter 110 performs visibility testing and updates SC_VISIBLE_X if any tiles, draw packets, relative to the visibility query for draw packets X, are deemed visible.

Driver A 104 thereupon sets a VIZ_QUERY_ENABLE and a VIZ_QUERY_ID bit to be equivalent to the value X, step 222. The command processor 108 sets an END_RCVD_X bit and creates a VIZ_QUERY_END event, step 224. Step 226, the scan converter 110 receives the VIZ_QUERY_END packet and sends results to the command processor 108.

The command processor discards only non-visible draw packets, step 228. Driver B thereupon sets a VIZ_QUERY_ENABLE and a VIZ_QUERY_ID value equal to the value Y, step 230. Driver B submits a plurality of draw packets relative to the associated ID Y, step 232. The scan converter 110 performs visibility testing and updates the SC_VISIBLE_Y value to determine if any tiles, draw packets, are visible relative to the bounding volume object, step 234.

The command processor 108 thereupon sets and END_RCVD_Y bit and creates a VIZ_QUERY_EVENT command, step 236. Step 238, the scan converter 238 receives the VIZ_QUERY_END packet cross dedicated connection 120 and sends the results to the command processor 108. Thereupon, the command processor 108 discards only non-visible draw packets, step 240. As such, the method is complete, step 242.

As further noted, the command processor 108 may further provide for the rendering of the draw packets which have been deemed potentially visible, having a SC_VISIBLE bit set based on the operations of the scan converter relative to the bounding volume object.

As such, the present invention provides for graphics processing by the effective utilization of object based visibility culling by determining which draw packets are definitely not visible relative to a volume bounding volume object. Through the utilization of the command processor 108 and the scan converter 110 relative to at least one driver, such as drivers 104 and/or 106, operations may be performed to provide for an early determination and effective culling of draw packets, which are deemed not visible. Moreover, the command processor 108 performs a further comparison step for only rendering draw packets which have been determined through a visibility query to be potentially visible.

It should be understood that the implementation of other variations and modifications of the invention in its various aspects will be apparent to those of ordinary skill in the art, and that the invention is not limited by the specific embodiments described herein. For example, the graphics processing unit, the command processor 108, the scan converter 110 and the drivers may be disposed on one or more processors executing executable instructions. Moreover, the scan converter 110 may further provide for further coupling to memory devices for storing further culling based information to provide for a greater degree of determination of non-visible draw packets. It is therefore contemplated to cover by the present invention, any and all modifications, variations, or equivalents that fall within the scope of the basic underlying principles disclosed and claimed herein.

## Claims

1. A method for object based visibility culling comprising:
receiving a plurality of draw packets;
comparing each of the plurality of draw packets to a bounding volume object;
for each of the plurality of draw packets, if the draw packet is deemed potentially visible, setting a visibility query identifier; and
rendering the draw packets having the set visibility query identifier.

2. The method of claim 1 further comprising:
prior to rendering the draw packets;
providing the draw packets to a command processor such that the command processor checks for the set visibility query identifier.

3. The method of claim 2 wherein prior to the step of rendering the draw packet the method further includes:
fetching a plurality of indices for the draw packet.

4. The method of claim 2 or claim 3, wherein when the visibility query identifier is not set, indicating the draw packets on as not being visible, the command processor discards the draw packet.

5. The method of claim 4, in which the command processor discards the draw packet prior to fetching a plurality of indices.

6. The method of claim 2 or any claim dependent thereon further comprising:
prior to providing the draw packets to the command processor:
stalling for a predetermined time interval to insure the setting of the visibility query identifier.

7. The method of any one of the preceding claims, wherein the step comparing each of the plurality of draw packets to the bounding volume object includes at least one of the following: back-face culling, view frustrum comparison, user-clip plane discard, and hierarchical-z discard.

8. An apparatus for object based visibility culling, the apparatus comprising:
a general processing unit; and
a memory device storing executable instructions such that the general processing unit, in response to the executable instructions:
receives a plurality of draw packets;
compares each of the plurality of draw packets to a bounding volume object;
for each of the plurality of draw packets, if the draw packet is deemed potentially visible, sets a visibility query identifier; and
renders the draw packets having the set visibility query identifier.

9. The apparatus of claim 8 wherein the processor, in response to the executable instructions:
prior to rendering the draw packets, provides the draw packets to a command processor such that the command processor checks for the set visibility query identifier.

10. The apparatus of claim 9 wherein the processor, in response to the executable instructions:
fetches a plurality of indices for the draw packet.

11. The apparatus of claim 9 or claim 10, wherein the processor, in response to the executable instructions:
when the visibility query identifier is not set, indicates the draw packets on as not being visible, the command processor discards the draw packet.

12. The apparatus of any one of claims 9 to 11, wherein the processor, in response to the executable instructions:
prior to providing the draw packets to the command processor, stalls for a predetermined time interval to insure the setting of the visibility query identifier.

13. The apparatus of any one of claims 8 to 12, wherein the step executed by the processor, in response to the executable instructions, of comparing each of the plurality of draw packets to the bounding volume object includes at least one of the following: back-face culling, view frustrum comparison, user-clip plane discard, and hierarchical-z discard.
